# EUROPÄISCHE PATENTANMELDUNG

(11) **EP 2 305 761 A1**
(43) Veröffentlichungstag der Anmeldung: **06.04.2011**
(21) Anmeldenummer: 10178359.5
(22) Anmeldetag: 22.09.2010
(51) Int. Cl.: C09D 11/00

(54) **Inkjet-Tinte**

(30) Priorität: 05.10.2009 AT 15672009
(71) Anmelder: Österreichische Staatsdruckerei GmbH, 1230 Wien (AT); Aerospace & Advanced Composites GmbH, 2700 Wiener Neustadt (AT)
(72) Erfinder: Stelzer, Nils, 2444, Seibersdorf (AT); Steiner, Hannes, 2444, Seibersdorf (AT); Gausterer, Reinhart, 1230, Wien (AT); Baca, Lubos, 90101, Malacky (SK)
(74) Vertreter: Müllner, Martin

(57) **Zusammenfassung**

Eine Inkjet-Tinte, die schwere Pigmente, insbesondere Seltenerd-Pigmente, z.B. Yittriumoxid-Pigmente, enthält, soll so formuliert werden, dass sie längere Zeit hindurch stabil bleibt. Dazu wird erfindungsgemäß die Viskosität der Tinte auf 40 bis 60 mPa•s eingestellt und mit einem eine Agglomeration der Partikel hemmenden Mittel versetzt. Weiters soll der pH-Wert auf einen Wert gleich oder höher 6 eingestellt sein und die Teilchengröße der schweren Pigmente 0,2 bis 1 µm betragen. Zur Einstellung der Viskosität der Tinte eignet sich Polyvinylalkohol, und Polyvinylpyrolidon eignet sich als ein die Agglomeration hemmendes Mittel. Ein Leitsalz, z.B. LiNO₃ oder LiOH, kann zugesetzt werden, damit die Leitfähigkeit zumindest 1 S/cm beträgt.

## Beschreibung

### Technisches Gebiet

Die Erfindung betrifft eine Inkjet-Tinte gemäß dem Oberbegriff des Anspruchs 1.

### Stand der Technik

Als Basis für die Herstellung von Sicherheitspigmenten für den Inkjetdruck kann dotiertes Yttriumoxid (Y₂O₃), wie dies in der WO 2008/132223 A erwähnt ist, dienen. Diese Sicherheitspigmente führen bei einer Anregung durch Bestrahlung z.B. mittels eines Lasers zu Anti-Stokes-Lumineszenzerscheinungen, wobei sich ausgeprägte Spitzen im Spektrum ergeben. Damit wird bei Sicherheitsdrucken ein hohes Maß an Fälschungssicherheit ermöglicht.

Bei bekannten pigmentierten Inkjet-Tinten sind die Pigmente in Form von Nanopartikeln in einer Größe von beispielsweise 0,5 µm enthalten. Wenn die Partikel geringe Dichte haben, bleibt solch eine Tinte trotzdem lange stabil, d.h. die Pigmente setzen sich nicht oder kaum ab.

Allerdings weist Y₂O₃ mit 5 g/cm³ eine hohe Dichte auf, wodurch sich Probleme hinsichtlich der Stabilisierung von Suspensionen ergeben. Die geringe Stabilität der bekannten derartigen Suspensionen bringt beim Druck erhebliche Probleme mit sich und kann dazu führen, dass sich die schweren Sicherheitspigmente absetzen, bevor die Suspension bzw. Tinte zu den Düsen eines Druckers gelangt.

Als Gegenmaßnahme drängt sich zunächst auf, die Teilchengröße stark zu reduzieren, denn eine Suspension ist bekanntlich umso stabiler, je kleiner die Teilchen sind. Dies ist allerdings bei Sicherheitspigmenten mit Anti-Stokes-Lumineszenz nicht sinnvoll, weil Anti-Stokes-Lumineszenz ein Kristallgitter mit einer gewissen Mindestgröße benötigt, damit Energieunterschiede zwischen den verschiedenen angeregten Niveaus ausgeglichen werden können. M.a.W.: Wenn die Teilchen zu klein sind, bildet sich keine Anti-Stokes-Lumineszenz mehr aus.

### Darstellung der Erfindung

Ziel der Erfindung ist es, eine Inkjet-Tinte vorzuschlagen, bei der diese Probleme vermieden sind und bei der die Partikel für eine ausreichend lange Zeit in der Suspension in Schwebe bleiben, obwohl sie eine hohe Dichte und eine gewisse Mindestgröße aufweisen.

Erfindungsgemäß wird dies bei einer Inkjet-Tinte der eingangs erwähnten Art durch die kennzeichnenden Merkmale des Anspruchs 1 erreicht.

Durch die vorgeschlagene hohe Viskosität der Tinte ist sichergestellt, dass die schweren Partikel für eine ausreichend lange Zeit in der Suspension in Schwebe bleiben. Durch die Zugabe eines die Agglomeration hemmenden Mittels ist sichergestellt, dass es im Wesentlichen zu keiner Verklumpung der schweren Partikel kommt. Verklumpte Teilchen würden sich rasch absetzen; selbst wenn dies nicht der Fall wäre, so würden sie die Düsen des Inkjet-Druckers verstopfen. Weiters ist auch ein pH-Wert von zumindest 6 notwendig, denn im sauren Milieu fallen die Partikel sehr rasch aus, wie im Rahmen der vorliegenden Erfindung festgestellt wurde. Bei Versuchen hat sich gezeigt, dass sich zur Einstellung der Viskosität Polyvinylalkohol (PVA) sehr gut eignet.

Durch die Merkmale des Anspruchs 3 ergibt sich ein sehr hohes Maß an Stabilität der Tinte, wobei die besten Ergebnisse durch die Merkmale des Anspruchs 4 erreicht werden. Dies ist ein guter Kompromiss zwischen Stabilität der Tinte und deren Verdruckbarkeit mittels Inkjet-Düsen.

Durch die Merkmale des Anspruchs 5 wird eine Agglomeration der Sicherheitspigmente sehr weitgehend vermieden, wodurch die Bildung größerer und daher erheblich rascher absinkender Partikel, die außerdem die Inkjet-Düsen verstopfen könnten, vermieden wird.

Es hat sich gezeigt, dass durch die Merkmale des Anspruchs 6 Tinten erhalten werden, die sich durch eine besonders hohe Stabilität auszeichnen und die gleichzeitig eine ausreichend starke Anti-Stokes-Lumineszenz zeigen.

Um ein sehr deutliches Erkennen der Echtheit eines Druckproduktes zu ermöglichen, ist es vorteilhaft, die Merkmale des Anspruchs 7 vorzusehen. Durch diese Merkmale ergeben sich bei einer Anregung eines mit einer solchen Tinte bedruckten Produktes sehr ausgeprägte und charakteristische Spitzen im Spektrum.

Um beim Drucken mit einer erfindungsgemäßen Tinte Probleme durch elektrostatische Aufladungen zu vermeiden, ist es vorteilhaft, die Merkmale des Anspruchs 8 vorzusehen.

### Bester Weg zur Ausführung der Erfindung

Es wird nun die Erfindung anhand eines Beispiels zur Herstellung einer erfindungsgemäßen Tinte erläutert.

Basis für die Herstellung von Sicherheitspigmenten für den Inkjetdruck ist dotiertes Yttriumoxid (Y₂O₃), wie dies aus der WO2008/132223 A bekannt ist.

Es wurde ein Versuch durchgeführt. Bei diesem wurde Y₂O₃ in einem nasschemischen Prozess hergestellt. Als Zwischenprodukt entsteht dabei ein Karbonat- oder Ammonium-Niederschlag, der in einem Hochtemperaturprozess bei 900°C 2 Stunden lang geglüht wurde, wodurch sich eine starke Korngrößenzunahme ergibt, was eine nachfolgende Zerkleinerung notwendig macht.

Das so erhaltene Y₂O₃ wurde mehrmals mit Wasser gewaschen, bis keine Änderung des pH-Wertes des Waschwassers mehr auftrat. Danach wurde das Y₂O₃ in einer Kugelmühle zerkleinert. Zu einem Teil Y₂O₃ (massebezogen) werden sechs Teile Wasser und 18 Teile 1 mm YSZ-Mahlkugeln zugegeben. Die Kugelmühle verfügte über eine Rührwelle mit YSZ-Mitnehmern. Der Behälter war aus Kunststoff hergestellt und wurde während des 5 h dauernden Mahlvorganges bei 1500 U/min mit Wasser gekühlt.

In einem nächsten Schritt wurden die Kugeln mittels eines 0,7 mm-Siebs vom Y₂O₃ Pulver abgetrennt. Anschließend wurde die wässrige Y₂O₃ -Aufschlämmung mittels eines Hochenergierührers weitere 15 min bei 14000 U/min gerührt.

Danach wurde die Aufschlämmung mit einem 40 µm-Sieb von restlichen Grobanteilen gereinigt. Die Nasssiebung erfolgte unter Ultraschalleinwirkung, da andernfalls die Aufschlämmung das Sieb nicht passieren könnte. Die gesiebte Aufschlämmung wurde mit so viel Wasser verdünnt, bis ein Feststoffgehalt von ca. 1 % (Masseprozent) erreicht war.

Die so hergestellte wässrige Suspension von dotiertem Y₂O₃ wurde zur Bestimmung der Korngrößenverteilung 2 min bei 3500 U/min zentrifugiert. Danach wurde die Probe aus dem Überstand entnommen. Es wurde eine bimodale Korngrößenverteilung gefunden, mit einem Anteil zwischen 400 nm und 700 nm und einem weiteren Anteil zwischen 1 µm und 1,7 µm.

Durch Erhöhung der Viskosität mittels PVA (Polyvinylalkohol) und Zusatz eines Fixiermittels konnten die Stabilität der Suspension sowie das Druckbild verbessert werden. Es können dabei Polyvinylalkohole unterschiedlicher Molmasse gezielt zur Einstellung der Viskosität genutzt werden. Je höher die Viskosität eingestellt ist, desto langsamer ist die Sedimentationsgeschwindigkeit der suspendierten Partikel.

Weiters wurde Polyvinylpyrolidon (PVP), ein wasserlösliches Polymer, das gut an polare Moleküle bindet, zugesetzt.

Es wurden somit Tinten auf Wasserbasis hergestellt, die in Masseprozent Folgendes enthielten:
- 1 % bis 3 % schwere Pigmente
- bis zu 4 % PVA 56
- 0,5 % PVP K30 (Poyvinylpyrolidon)
- Lösungsmittel Wasser
- Leitsalz, z.B. LiNO₃ oder LiOH

Die Viskosität der Tinten wurde auf zwischen 50 und 56 mPa·s eingestellt.

Werden einer wässrigen 4 %igen PVA 56-Lösung 2-3 % Pigmente hinzugefügt, so bleibt diese Dispersion über Monate stabil. Für den Einsatz im industriellen Tintenstrahldruck ist es zweckmäßig, ein Leitsalz, z.B. LiNO₃ oder LiOH hinzuzufügen, sodass eine elektrische Leitfähigkeit von zumindest 1 S/cm erreicht wird.

Mit einer solchen Tinte wurden Inkjet-Versuche durchgeführt. Dabei wurde ein Piezodosierventil für Jet- und Dosiernadelbetrieb (PICO Dosiertechnik GmbH & Co. KG, Deutschland) verwendet. Die Pigment-Suspension wurde direkt in den Vorratsbehälter des Dosierventils gefüllt. Das Dosierventil wurde so eingestellt, dass ein quadratisches Punktemuster auf Glas bzw. Papier gedruckt wurde. Das Ventil wurde dabei fix positioniert, und das Substrat wurde auf einem beweglichen x-y-Tisch unter dem Ventil vorbeigeführt. Ein Dosiervorgang dauerte dabei 0,05 ms, der Druck betrug 0,3 MPa und der Abstand zwischen Substrat und Düse betrug 0,5 cm.

Die Punkte hatten einen Durchmesser von ca. 1 mm und konnten mittels Laser zu deutlich sichtbarer Lumineszenz angeregt werden. Durch Erhöhung der Viskosität z.B. mittels PVA und Zusatz eines Fixiermittels können die Stabilität der Suspension sowie das Druckbild noch verbessert werden. Mit der derzeit zur Verfügung stehenden Technik können einfache geometrische Muster, wie z.B. Barcodes, gedruckt werden. Die Suspension hatte während des Versuchszeitraums von ca. einer Stunde keinerlei Probleme bezüglich Sedimentation verursacht. Das Dosierventil wurde im Anschluss mit einer Mischung aus Isopropanol und Aceton gereinigt.

## Patentansprüche

1. Inkjet-Tinte, die schwere Pigmente, insbesondere Seltenerd-Pigmente, enthält, **dadurch gekennzeichnet, dass** die Viskosität der Tinte auf 40 bis 60 mPa·s eingestellt ist, dass die Tinte mit einem eine Agglomeration der Partikel hemmenden Mittel versetzt ist, dass der pH-Wert auf einen Wert gleich oder höher 6 eingestellt ist und dass die Teilchengröße der schweren Pigmente 0,2 bis 1 µm beträgt.

2. Tinte nach Anspruch 1, **dadurch gekennzeichnet, dass** die Viskosität der Tinte mittels Polyvinylalkohol eingestellt ist.

3. Tinte nach Anspruch 1 oder 2, **dadurch gekennzeichnet, dass** die Viskosität 45 bis 55 mPa·s beträgt.

4. Tinte nach einem der Ansprüche 1 bis 3, **dadurch gekennzeichnet, dass** die Viskosität etwa 50 mPa·s beträgt.

5. Tinte nach einem der Ansprüche 1 bis 4, **dadurch gekennzeichnet, dass** die Tinte Polyvinylpyrolidon als ein die Agglomeration hemmendes Mittel in einem Ausmaß zwischen 0,4 und 0,8 mmol/l enthält.

6. Tinte nach einem der Ansprüche 1 bis 5, **dadurch gekennzeichnet, dass** die Teilchengröße der schweren Pigmente 0,2 bis 0,5 µm beträgt.

7. Tinte nach einem der Ansprüche 1 bis 6, **dadurch gekennzeichnet, dass** als schwere Pigmente Yittriumoxid-Pigmente enthalten sind.

8. Tinte nach einem der Ansprüche 1 bis 7, **dadurch gekennzeichnet, dass** die Tinte ein Leitsalz, z.B.LiNO₃ oder LiOH enthält und eine Leitfähigkeit von zumindest 1 S/cm aufweist.
